(19) Europäisches Patentamt
European Patent Office
Office européen des brevets

(11) **EP 4 257 971 B1**

(12) **EUROPEAN PATENT SPECIFICATION**

(45) Date of publication and mention
of the grant of the patent:
**24.12.2025 Bulletin 2025/52**

(21) Application number: **23166598.5**

(22) Date of filing: **04.04.2023**

(51) International Patent Classification (IPC):
***G01N 30/86*** (2006.01) ***G01N 30/88*** (2006.01)

(52) Cooperative Patent Classification (CPC):
**G01N 30/88; G01N 30/8631;** G01N 2030/889

(54) **ANALYSIS SYSTEM**

ANALYSESYSTEM

SYSTÈME D'ANALYSE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **08.04.2022 JP 2022064333**

(43) Date of publication of application:
**11.10.2023 Bulletin 2023/41**

(73) Proprietor: **Yokogawa Electric Corporation
Musashino-shi, Tokyo 180-8750 (JP)**

(72) Inventors:
• ICHIMURA, Ryota
  **Musashino-shi (JP)**
• SUYAMA, Shuichi
  **Musashino-shi (JP)**

(74) Representative: **Osha BWB
2, rue de la Paix
75002 Paris (FR)**

(56) References cited:
WO-A1-2019/203972     WO-A1-2020/104973
US-A1- 2020 103 382

**Description**

Technical Field

The present invention relates to an analysis system.

Background Art

An analysis system includes a column for separating components of a sample gas and allows analyzing a plurality of components contained in the sample gas (see for example, JP 2005-300397 A).

In this type of analysis system, a state of a column, that is, resolutions of the plurality of components contained in the sample gas, affects its accuracy of analysis. The state, such as a deterioration of column, has been determined based on experience of an operator.

WO 2019/203972 A1 describes a method and system for evaluating performance of a chromatographic system having a detector operable to output signals. The method and system include steps and components for receiving one or more blank run acceptance criteria, receiving from the detector a detector signal from a blank run, extracting attributes of the detector signal, comparing the extracted attributes against corresponding blank run acceptance criteria, and providing a decision relating to the viability of the chromatographic system based on results of the comparison.

US 2020/103382 A1 describes a liquid chromatograph for analyzing a sample by supplying an eluent and the sample and separating a component contained in the sample to detect the component. The chromatograph includes: a detection portion (controller) configured to detect a fault in the analysis; and an operation controller (controller) configured to cause a constituent element related to the analysis to perform at least one of an operation for identifying a factor of the fault and an operation for avoiding the fault.

SUMMARY

One or more embodiments provide a technological improvement over such a conventional analysis system. In particular, one or more embodiments provide an analysis system that precisely diagnoses a state of a column. This provides a practical, technological improvement over a conventional analysis system that would be readily appreciated by those skilled in the art. Further details regarding the various improvements and advantages will become apparent from the descriptions that follow.

The present disclosure is directed to an analysis system as defined in claim 1. Embodiments of the present disclosure are defined in the dependent claims and are described below.

The analysis system comprises a storage (e.g., a storage unit) and a processor (e.g., a predicting unit). The storage is configured to receive peak resolutions of a chromatogram obtained from a column gas-chromatograph configured to separate a component from a sample gas, and to store each of the peak resolutions in association with a specific time. The processor is configured to predict a state of the column based on the stored peak resolution. The state includes a first state of the column after a first period has elapsed, and a second state of the column after a second period has elapsed, the second period being longer than the first period.

One or more embodiments are directed to the analysis system, wherein the processor is configured to generate the peak resolutions based on the peak resolutions from a past predetermined period.

One or more embodiments are directed to the analysis system, wherein the processor may be configured to predict the first state and the second state based on different calculating methods.

One or more embodiments are directed to the analysis system, wherein the processor may be configured to predict a future peak resolution as the state of the column, and the analysis system may further comprise a setting unit (the processor) and a determining unit (the processor). Accordingly, according to one or more embodiments, the processor may comprise the predicting unit, the setting unit, and the determining unit. The setting unit is configured to set a threshold value to be compared with the future peak resolution. The determining unit is configured to determine whether to replace the column by comparing the future peak resolution with the threshold value.

One or more embodiments are directed to the analysis system, wherein the storage is configured to store the peak resolutions of a plurality of columns in association with respective identification numbers of the plurality of columns and the specific time, and the processor may be configured to predict respective states of the plurality of columns.

One or more embodiments are directed to the analysis system, wherein the analysis system further comprises an output unit configured to output the predicted state of the column. According to one or more embodiments, the output unit includes a display configured to display an image indicating the predicted state of the column.

One or more embodiments are directed to the analysis system, wherein a precise diagnose of a deterioration state of a column is provided by the analysis system.

BRIEF DESCRIPTION OF THE DRAWINGS

FIG. 1 is a block diagram illustrating a schematic configuration of an analysis system according to one or more embodiments;

FIG. 2 is an explanatory diagram describing a calculation of a peak resolution in the analysis system according to one or more embodiments;

FIG. 3 is a graph indicating a trend of a peak resolution in the analysis system according to one or more embodiments;

FIG. 4 is an explanatory diagram indicating a display example of an output unit in the analysis system according to one or more embodiments;

FIG. 5 is an explanatory diagram indicating a display example of an output unit in the analysis system according to one or more embodiments;

FIG. 6 is an explanatory diagram indicating a display example of an output unit in the analysis system according to one or more embodiments;

FIG. 7 is a flowchart indicating an operation of the analysis system according to one or more embodiments;

FIG. 8 is a flowchart indicating a modification of the operation of the analysis system according to one or more embodiments; and

FIG. 9 is a block diagram illustrating a modification of the configuration of the analysis system according to one or more embodiments.

DESCRIPTION OF THE EMBODIMENTS

An analysis system according to one or more embodiments takes a sample separated from a process and measures a concentration of each component contained in the sample (sampled gas) in order to monitor and control processes in a plant or the like.

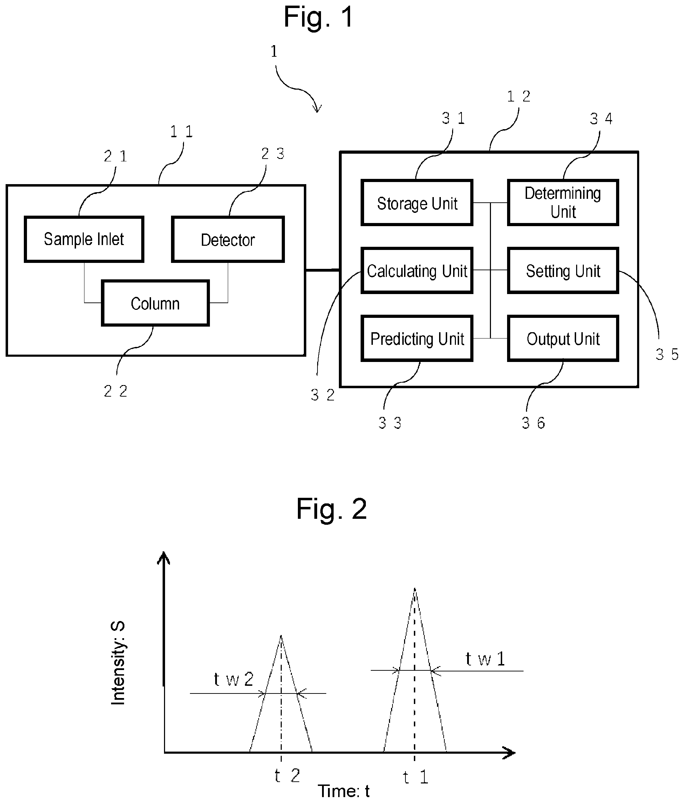

A description will be given of a configuration of the analysis system according to one or more embodiments with reference to FIG. 1.

As shown in FIG. 1, an analysis system 1 includes an analyzer 11 that separates and detects a plurality of components contained in a sample and an information processing apparatus 12 connected to the analyzer 11. The information processing apparatus 12 performs information processing on detection results of the analyzer 11. The analysis system 1 can include a plurality of the analyzers 11, and the information processing apparatus 12 can perform the information processing on detection results of the plurality of analyzers 11.

The analyzer 11 is provided with a sample inlet 21 for introducing a sample as a sample gas into the analyzer 11. The sample inlet 21 is connected to a process in a plant (not illustrated), and a sample separated from the process and sampled (sampled gas) is supplied to the sample inlet 21. The sample inlet 21 is connected to a carrier gas cylinder (not illustrated), and a carrier gas stored in the carrier gas cylinder is supplied to the sample inlet 21.

When the sample gas is liquefied, the sample inlet 21 may include a vaporizer (not illustrated) to vaporize the liquid sample for introducing the vaporized sample gas into a column 22. The sample inlet 21 may include a regulator in a conduit connected to the carrier gas cylinder and the like so as to allow an appropriate regulation of a flow rate of the carrier gas and the like. The sample gas and the carrier gas are supplied from the sample inlet 21 to the column 22.

The column 22 is configured to separate the sample gas and the carrier gas supplied from the sample inlet 21 in a path thereof. The column 22 is provided with stationary phases, such as an adsorbent and a liquid phase, and these stationary phases cause an interaction, such as adsorption or distribution, with a sample component contained in the sample gas.

This interaction selectively delays respective sample components contained in the sample gas, which causes differences in arrival time of the respective sample components to a detector 23 (the respective sample components are separated). For example, the column 22 is configured as a packed column or a capillary column and employs any configuration insofar as the sample gas and the carrier gas are allowed to be separated, and the configuration thereof is not particularly limited. The respective components of the sample gas separated in the column 22 are supplied to the detector 23.

The detector 23 is for detecting the respective components of the sample gas separated in the column 22. The analyzer 11 is configured to convert information on the detection result and the like in the detector 23 into an electrical signal and transmit the electrical signal to the information processing apparatus 12. The detection result in the detector 23 may be, for example, a chromatogram with time on the horizontal axis and signal intensity on the vertical axis.

The information processing apparatus 12 includes a storage unit 31, a calculating unit 32, a predicting unit 33, a determining unit 34, a setting unit 35, and an output unit 36. The information processing apparatus 12 includes one or more processors. In one or more embodiments, "processor" is a general-purpose processor or an exclusive processor for specific processing, and not limited to these. The information processing apparatus 12 is communicatively connected to respective configurations constituting the analysis system 1 and may control the whole operation of the analysis system 1.

The storage unit 31 stores the information received from the analyzer 11. The storage unit 31 may store, for example, a system program, an application program, a log data file, various kinds of data received from a manufacturer, and the like as information for controlling the analysis system 1. The storage unit 31 includes any storing module including a Random Access Memory (RAM), a Read-Only Memory (ROM), a Hard Disk Drive (HDD), and a Solid State Drive (SSD). The storage unit 31 may functions as, for example, a main storage unit, an auxiliary storage unit, or a cache memory. The storage unit 31 is not limited to any configuration built in the information processing apparatus 12, and may be an external database or an external type storing module, such as Secure Digital (SD) card or a Universal Serial Bus (USB).

The calculating unit 32 reads the information stored in the storage unit 31 and performs various kinds of arithmetic processing. The calculating unit 32 performs calculation of concentrations and peak resolutions of the respective sample components as the arithmetic processing based on, for example, the detection result in the detector 23. The calculating unit 32 stores the results of the arithmetic processing in the storage unit 31.

Here, the peak resolution is a calculated value indicating a separation state of component peaks of the respective sample components as the detection result in the detector 23. The calculation of the peak resolution in the calculating unit 32 may employ a known calculation method.

For example, the peak resolution is calculated from retention times and half-value widths of two peaks based on the following formula (1).

$$X = 2(t1 - t2)/(1.699(tw1 - tw2))\cdots(1)$$

Here, X is the peak resolution, t1 is the retention time of one of the component peaks, t2 is the retention time of the other of the component peaks, tw1 is the half-value width of one of the component peaks, and tw2 is the half-value width of the other of the component peaks (see FIG. 2).

The calculating unit 32 stores the results of the arithmetic processing based on the formula (1) in the storage unit 31. Specifically, the calculating unit 32 stores the calculated peak resolution X in association with the detected time in the storage unit 31.

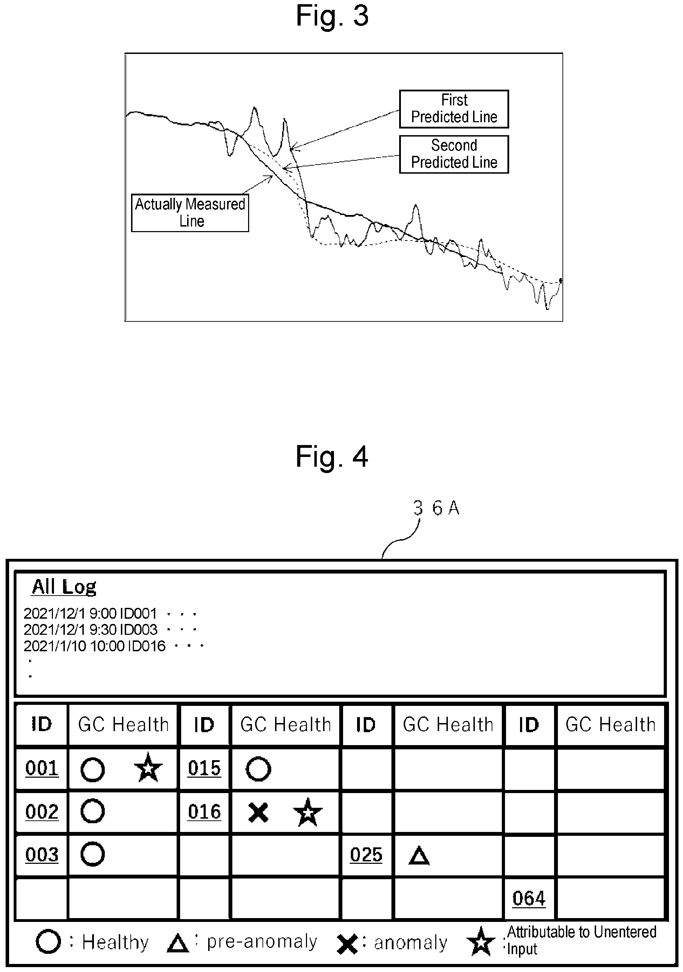

The predicting unit 33 reads the peak resolutions (peak resolutions for a predetermined period) from a past predetermined period from the storage unit 31. Based on the peak resolutions for the predetermined period, peak resolution data for the predetermined period (corresponding to the actually measured line in FIG. 3) are generated. Here, for example, the predicting unit 33 can generate a moving average of the peak resolutions for the past 14 days as the peak resolution data.

The predicting unit 33 predicts a predicted peak resolution after an elapse of a predetermined period (first period) from the generated peak resolution data using a Kalman filter. Here, for example, the predicting unit 33 can predict the predicted peak resolution after 30 days (corresponding to the first predicted line in FIG. 3) using the Kalman filter.

Furthermore, the predicting unit 33 may predict a predicted peak resolution after an elapse of a predetermined period (second period) longer than the first period using a linear regression analysis from the generated peak resolution data. Here, for example, the predicting unit 33 can predict the predicted peak resolution (corresponding to the second predicted line (dashed line) in FIG. 3) after 90 days using the linear regression analysis.

Obviously, the predicting unit 33 stores the prediction results or the like in the storage unit 31. Specifically, the predicting unit 33 stores the peak resolution data for the predetermined period and the predicted peak resolutions after an elapse of the predetermined period in association with at least one of generated time or predicted time in the storage unit 31.

The determining unit 34 reads the predicted peak resolution and a threshold value from the storage unit 31 and compare them. Here, the threshold value is a comparison target for the predicted peak resolution and a reference for diagnosing a state of the column 22 (a comparison reference value for the peak resolution).

The determining unit 34 determines that the column 22 is in a healthy state or the column 22 is not in replacement timing when the predicted peak resolution is greater than the threshold value. On the other hand, the determining unit 34 determines that the column 22 is not in a healthy state or the column 22 is in replacement timing when the predicted peak resolution is equal to or less than the threshold value.

The threshold value may be a plurality of values. For example, in a case where the threshold values are set to two values of a first threshold value and a second threshold value and when the predicted peak resolution is greater than the first threshold value, the determining unit 34 determines that the column 22 is in a healthy state or the column 22 is not in replacement timing (healthy). The determining unit 34 determines that the column 22 is in a healthy state but beginning to deteriorate or the column 22 will be possibly in replacement timing after an elapse of a predetermined time period (pre-anomaly) when the predicted peak resolution is greater than the second threshold value and equal to or less than the first threshold value. Furthermore, the determining unit 34 determines that the column 22 is not in a healthy state or the column 22 is in replacement timing (anomaly) when the predicted peak resolution is equal to or less than the second threshold value.

The setting unit 35 performs various setting of the analysis system 1. As the setting of the analysis system 1, the setting unit 35 can perform setting of, for example, a flow rate (regulator) of the sampled gas and the carrier gas in the analyzer 11, a sensitivity of the detector 23 and the like, and setting of the calculation method and the prediction (the first period and the second period) in the information processing apparatus 12.

The setting unit 35 may include one or more input interface that accepts input operation of a user and obtains input information based on the operations of the user. For example, the setting unit 35 may include a physical key, a capacitive key, a pointing device, a touch screen provided integrally with, for example, a display of the output unit 36 described later, or a microphone or the like that receives voice input. Obviously, the configuration of the setting unit 35 is not limited to these.

The output unit 36 includes one or more output interface that reads various kinds of information from the storage unit 31 and notifies the operator. As the various kinds of information, for example, the output unit 36 can output the prediction result of the predicting unit 33 and the determination result of the determining unit 34.

For example, the output unit 36 can be configured with a display that outputs the information in images or a speaker that outputs the information via voice, and the like. Obviously, the configuration of the output unit 36 is not limited to these. Also, the output unit 36 may be configured integrally with the information processing device 12 or may be provided separately.

The analysis system 1 having the above-described configuration can accurately diagnose the state of the column 22. Note that the functions of the information processing apparatus 12 can be realized by executing a computer program (program) by a processor included in the information processing device 12. That is, the functions of the information processing device 12 can be realized by software. The computer program causes the computer to execute the processing of steps included in the operation of the information processing device 12 for causing the computer to implement functions corresponding to the processing of each step. That is, the computer program is a program for causing the computer to function as the information processing device 12.

Here, the computer program can be recorded in a computer-readable recording medium. The computer-readable recording medium is, for example, a magnetic recording device, an optical disk, a magneto-optical recording medium, or a semiconductor memory. The program can be distributed by, for example, selling, assigning, or lending a portable recording medium, such as a Digital Versatile Disc (DVD) or a Compact Disc Read Only Memory (CD-ROM) on which the program is recorded. The program may be distributed by storing the program in a storage of a server and transferring the program from the server to another computer via a network. The program may be provided as a program product.

A computer temporarily stores, for example, a program recorded on a portable recording medium or a program transferred from a server, in a main storage device. Then, the computer reads the program stored in the main storage device with the processor, and executes processing according to the read program with the processor. The computer may read the program directly from the portable recording medium and may execute processing according to the program. The computer may execute processing according to the received program every time the program is transferred from the server to the computer. The processing may be executed by a so-called Application Service Provider (ASP) type service that implements functions only by executing instructions and obtaining results without transferring a program from a server to a computer. The program includes information that is used for processing by an electronic computer and equivalent to the program. For example, data that is not an instruction itself to a computer and has a property of prescribing the processing of the computer corresponds to "a thing equivalent to a program."

A part or all of the functions of the information processing device 12 may be realized by a dedicated circuit included in the information processing device 12. That is, a part or all of the functions of the information processing device 12 may be realized by hardware. Further, the information processing device 12 may be realized by a single information processing device, or may be realized by cooperation of a plurality of control devices.

Exemplary display of the output unit 36 in the analysis system according to one or more embodiments will be described with reference to FIG. 4 to FIG. 6.

When the output unit 36 is a display that outputs information in images, the output unit 36 outputs the information indicating the state of the column 22 in a first screen 36A. For example, as shown in FIG. 4, the first screen 36A has information on respective identification numbers of the plurality of analyzers 11 and information on the state of the column 22 in the analyzer 11 corresponding to each identification number.

The identification numbers of the respective plurality of analyzers 11 are displayed in fields of an "ID" column. For example, in the fields of the "ID" column, "001", "002", "003", and the like are displayed as the identification numbers for identifying the respective plurality of analyzers 11.

The statuses of the columns 22 in the analyzers 11 corresponding to the respective identification numbers are displayed in fields of "GC Health" column. For example, in the fields of "GC Health" column, as the states of the columns 22 in the analyzers 11 corresponding to the respective identification numbers, a circle mark meaning "Healthy," a triangular mark meaning "Pre-anomaly," and/or a cross mark indicating "Anomaly" are displayed.

Obviously, the analysis system according to one or more embodiments is not limited to a system that displays the state of the column with marks having different shapes as described above. For example, the analysis system according to one or more embodiments may display the state of the column with marks of different colors or the like. Further, the analysis system according to one or more embodiments is not limited to a system that predicts the state of the column in the three stages of the healthy, the pre-anomaly, and the anomaly as described above. For example, the analysis system according to one or more embodiments may predict the state of the column in two stages or four or more stages. In this case, the output unit of the analysis system may display marks of different shapes, marks of different colors, or the like for allowing the identification of the column status in two stages or four or more stages.

Furthermore, the first screen 36A includes update information on the status diagnoses of the columns 22. The update information on the status diagnoses of the columns 22 is displayed in the "All Log" column in the upper portion of the first screen 36A. For example, in the "All Log" column, dates, times, identification numbers, and the like are displayed as the update information on the state diagnoses of the columns 22, and the operator can recognize when the state diagnosis of the column 22 in each analyzer 11 was updated.

Furthermore, the first screen 36A includes information indicating that there is an unentered input such as setting. Information indicating the presence of an unentered input of setting or the like is displayed in the fields of "GC Health" column. For example, in the fields of "GC Health" column, a star mark is displayed to mean the attributable to an unentered input as information indicating the presence of an unentered input of setting (for example, the threshold value).

The output unit 36 also has a link function of screen on the first screen 36A. For example, when the identification number of the analyzer 11 on the first screen 36A is pressed (clicked), the output unit 36 transitions to a second screen 36B having information indicating details of the state of the column 22 in the analyzer 11.

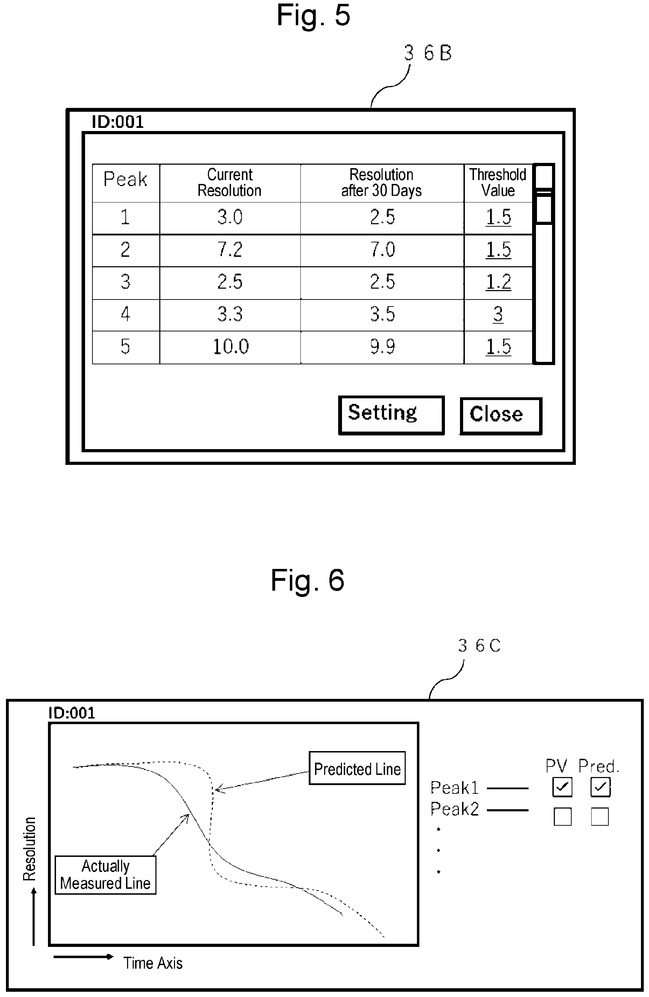

For example, as shown in FIG. 5, the second screen 36B includes information on the identification number of the specific analyzer 11, information on peak numbers, information on the peak resolutions, information on the predicted peak resolutions, and information on the threshold values. The peak numbers identify the peaks of respective components contained in the analysis results of the specific analyzer 11. The peak resolutions are the analysis results corresponding to the respective peak numbers. The predicted peak resolutions correspond to the respective peak numbers. The threshold values are set for the respective peak numbers.

The information on the identification number of the analyzer 11 is displayed at the top of the second screen 36B. For example, "ID: 001" is displayed as the identification number of the specific analyzer 11 at the top of the second screen 36B.

The information on the identification number of the analyzer 11 may be any information as long as the information can identify the plurality of analyzers 11. For example, the identification number may be a unique number (for example, "001") set for each of the analyzers 11 with addition of facility information (for example, "001-AB," "001-CD," "001-ABCD," or the like). The facility information includes information such as a location where the analyzer 11 is installed (A building B room) or a process (C line D part) as an analysis target (sampling target of sample) of the analyzer 11.

The information on the peak numbers that identifies the peaks of the respective components included in the analysis result of the analyzer 11 is displayed in fields of "Peak" column. For example, in the fields of "Peak" column, "1", "2", "3", and the like are displayed as the peak number information for identifying the peak of each component included in the analysis result of the analyzer 11.

The information on the peak number may be any information as long as the information can identify each peak. For example, the peak number may be a unique number (for example, "1") set for the peak of each component with addition of information on a device (device E1) or the like that detects the component (for example, "1-E1"). Obviously, the information on the device or the like that detects the component does not have to be added as the information on the peak number, and may be displayed as information on the device or the like corresponding to each peak number in fields of "Device" or the like (not illustrated) separately from the fields of "Peak" column.

The information on the peak resolutions as the analysis results corresponding to the respective peak numbers are displayed in fields of "current resolution." For example, in the fields of "current resolution," the calculated peak resolutions are displayed as the information on the peak resolutions as the analysis results corresponding to the respective peak numbers.

The information on the predicted peak resolutions corresponding to the respective peak numbers are displayed in fields of "resolution after 30 days." For example, in the fields of "resolution after 30 days," the predicted peak resolutions are displayed as the information on the predicted peak resolutions corresponding to the respective peak numbers.

The information on the threshold values set for the respective peak numbers are displayed in fields of "threshold value." For example, in the fields of "threshold value," the threshold values (comparison reference value for the peak resolution) as targets for comparison with the predicted peak resolutions set by the operator are displayed as the information on the threshold values set for the respective peak numbers.

The output unit 36 also has a threshold value setting function on the second screen 36B. For example, pressing (clicking) a threshold value set to an arbitrary peak number on the second screen 36B and then pressing (clicking) a "Setting" button displayed on the second screen 36B causes the output unit 36 to transition to a setting screen (not shown) for editing (changing) the threshold value set for the arbitrary peak number. This function allows the operator to easily change the threshold values for the individual component peaks in the individual analyzers 11.

The output unit 36 has a link function of screen on the second screen 36B. For example, when the "Close" button displayed on the second screen 36B is pressed (clicked), the output unit 36 causes the second screen 36B to transition (return) to the first screen 36A.

The output unit 36 also has a screen switching function on the second screen 36B. For example, the output unit 36 displays the second screen 36B in a tab and allows switching from the tab to display a third screen 36C having information indicating a trend of a state of the column 22 in the analyzer 11.

For example, as shown in FIG. 6, the third screen 36C has the trend of the peak resolution (information on time-series data). The trend of the peak resolution is a graph displayed with time on the horizontal axis and the resolution on the vertical axis.

The output unit 36 also has a display trend switching function on the third screen 36C. For example, the third screen 36C includes a check box "PV" for setting whether or not to display an actually measured line corresponding to each peak number, and a check box "Pred." for setting whether or not to display a predicted line corresponding to each peak number.

When the check box "PV" corresponding to an arbitrary peak number is pressed (checked), the output unit 36 displays the actually measured line corresponding to the arbitrary peak number in the trend of the peak resolution. When the check box "PV" corresponding to the arbitrary peak number is pressed again (unchecked), the output unit 36 hides the actually measured line corresponding to the arbitrary peak number from the trend of the peak resolution. The output unit 36 similarly switches between the display and the non-display of the predicted line corresponding to an arbitrary peak number by pressing the check box "Pred."

The output unit 36 can simultaneously display the plurality of trends (the actually measured lines and the predicted lines) corresponding to the plurality of peak numbers in the trend of the peak resolution. At this time, the output unit 36 may display lines of different line types or colors depending on the object to be displayed. For example, the output unit 36 may display the actually measured line and the predicted line with lines of different line types (solid line and dashed line). Also, the output unit 36 may display the plurality of trends (the actually measured lines and the predicted lines) corresponding to the plurality of peak numbers with lines of different colors.

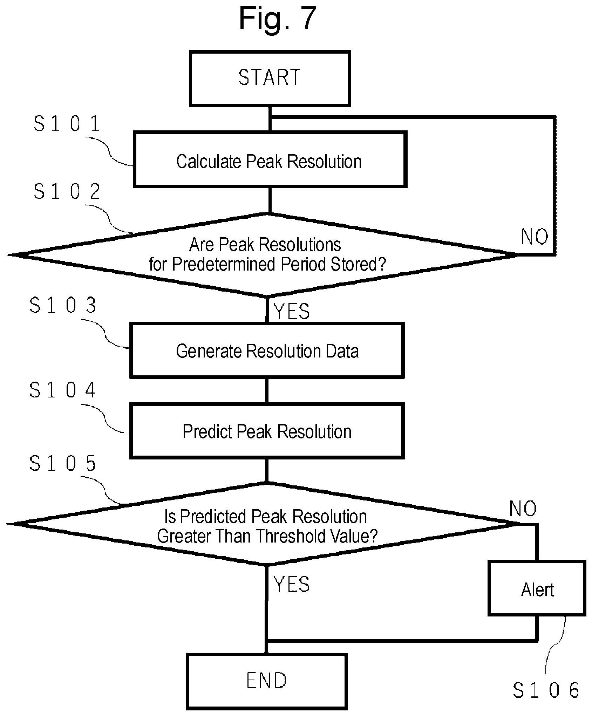

The operation of the analysis system according to one or more embodiments will be described with reference to FIG. 7.

When the analysis system 1 operates to perform the component analysis of the sample gas by the analyzer 11, the step of diagnosing the state of the column 22 starts. The step of diagnosing the state of the column 22 described below is performed, for example, periodically or every time the analyzer 11 analyzes the components of the sample gas while the analysis system 1 is in operation.

In Step S101, the information processing device 12 calculates the peak resolution in the analysis result by the analyzer 11, and the process proceeds to Step S102. At this time, the information processing device 12 stores the peak resolution in the storage unit 31.

In Step S102, when the information processing device 12 stores the peak resolutions for a predetermined period in the storage unit 31 (determined to be YES in S102), the process proceeds to Step S103. On the other hand, in Step S102, when the information processing apparatus 12 does not store the peak resolutions for the predetermined period (determined to be NO in S102), the process returns to Step S101. In other words, the information processing apparatus 12 repeats Steps S101 to S102 to accumulate the peak resolutions until the peak resolutions for the predetermined period are stored.

Here, the information processing apparatus 12 can set an arbitrary period as the peak resolutions for the predetermined period to be stored. This arbitrary period can be set by, for example, the operator. That is, the operator sets a predetermined time (arbitrary period) for which the peak resolutions should be stored via the setting unit 35. For example, when the operator sets 14 days as the predetermined time, the information processing device 12 repeats Steps S101 to S102 until the elapse of 14 days since the operation of the analysis system 1 starts, that is, the start of the component analysis by the analyzer 11.

In Step S103, the information processing apparatus 12 generates the peak resolution data based on the peak resolutions for the predetermined period stored in the storage unit 31, and the process proceeds to Step S104. Here, for example, the information processing apparatus 12 generates a moving average of the peak resolutions for the past 14 days as the peak resolution data. The information processing apparatus 12 also stores the resolution data in the storage unit 31.

In Step S103, the information processing apparatus 12 can set the shortest period (minimum number of data) and the longest period (maximum number of data) as the peak resolutions for the predetermined period required to generate peak the resolution data. The shortest period and the longest period can be set by the operator, for example. That is, the operator sets the shortest period and the longest period through the setting unit 35 as the predetermined period for which the peak resolutions should be stored.

Here, the shortest period is the minimum number of data of the peak resolution required to generate the peak resolution data in Step S103, and corresponds to the setting as the peak resolutions for the predetermined period to be stored in Step S102. The information processing apparatus 12 repeats Steps S101 to S102 to accumulate the peak resolutions until the peak resolutions for the shortest period are stored. That is, when the information processing apparatus 12 stores the peak resolutions for the shortest period in the storage unit 31 (determined to be YES in S102), the information processing apparatus 12 can proceed to Step S103. Therefore, for example, the information processing apparatus 12 sets a period (the number of data) corresponding to the peak resolution data for allowing the prediction of the predicted peak resolution after the elapse of the predetermined period with a desired accuracy, as the shortest period.

Further, the longest period is the maximum number of data of the peak resolution used for generating the peak resolution data in Step S103, and is for predicting the predicted peak resolution after the predetermined period with a sufficient accuracy. The information processing apparatus 12 generates the peak resolution data for the predetermined period based on the peak resolutions for the predetermined period (accumulated peak resolutions) between the shortest period and the longest period. Therefore, for example, the information processing apparatus 12 sets a period (the number of data) corresponding to the peak resolution data for allowing the prediction of the predicted peak resolution after the elapse of the predetermined period with a desired accuracy, as the longest period. When the storage unit 31 stores the peak resolutions for a period longer than the longest period, the information processing device 12 generates the peak resolution data based on, for example, the peak resolutions for the most recent (latest) longest period.

In Step S104, the information processing apparatus 12 predicts the peak resolution based on the peak resolution data stored in the storage unit 31, and the process proceeds to Step S105. At this time, the information processing apparatus 12 uses a Kalman filter to calculate the predicted peak resolution after an elapse of the first period (for example, 30 days later), and stores this predicted peak resolution in the storage unit 31.

In Step S105, the information processing apparatus 12 compares the predicted peak resolution after the elapse of the first period (for example, 30 days later) stored in the storage unit 31 with the threshold value. Here, when the predicted peak resolution after the elapse of the first period (for example, 30 days later) is greater than the threshold value (YES in S105), the determining unit 34 determines that the column 22 will be in a healthy state after the elapse of the first period (for example, 30 days later) or will not be in replacement timing after the elapse of the first period (for example, 30 days), and the step ends.

On the other hand, when the predicted peak resolution after the elapse of the first period (for example, 30 days later) is equal to or less than the threshold value (NO in S105), the determining unit 34 determines that the column 22 will not be in a healthy state after the elapse of the first period (for example, 30 days later) or will be in replacement timing after the elapse of the first period (for example, 30 days later), and the process proceeds to Step S106.

In Step S106, the output unit 36 notifies the operator that the column 22 will not be in a healthy state after the elapse of the first period (for example, 30 days later) or that the column 22 will be in replacement timing (the replacement time is approaching) after the elapse of the first period (for example, 30 days later), and the step ends.

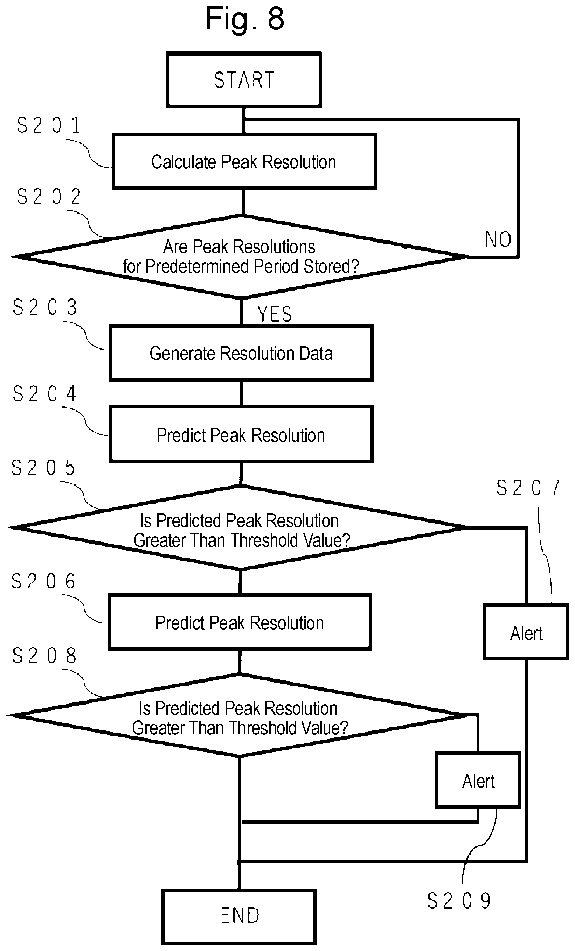

A modification of the operation of the analysis system will be described with reference to FIG. 8.

Since Steps S201 to S204 are the same as Steps S101 to S104 described above, the description thereof will be omitted.

In Step S205, the information processing apparatus 12 compares the predicted peak resolution after the elapse of the first period (for example, 30 days later) stored in the storage unit 31 with the threshold value. Here, when the predicted peak resolution after the elapse of the first period (for example, 30 days later) is larger than the threshold value (YES in S205), the determining unit 34 determines that the column 22 will be in a healthy state after the elapse of the first period (for example, 30 days later) or will not be in replacement timing after the elapse of the first period (for example, 30 days later), and the process proceeds to Step S206.

On the other hand, when the predicted peak resolution after the elapse of the first period (for example, 30 days later) is equal to or less than the threshold value (NO in S205), the determining unit 34 determines that the column 22 will not be in a healthy state after the elapse of the first period (for example, 30 days later) or will be in replacement timing after the elapse of the first period (for example, 30 days later), and the process proceeds to Step S207. Then, in Step S207, the output unit 36 notifies the operator that the column 22 will not be in a healthy state after the elapse of the first period (for example, 30 days later) or that the column 22 will be in replacement timing (the replacement time is approaching) after the elapse of the first period (for example, 30 days later), and the step ends.

In Step S206, the information processing apparatus 12 predicts the peak resolution based on the peak resolution data stored in the storage unit 31, and the process proceeds to Step S208. At this time, the information processing apparatus 12 uses the linear regression analysis to calculate the predicted peak resolution after the elapse of the second period (for example, 90 days later) longer than the first period, and stores this predicted peak resolution in the storage unit 31.

In Step S208, the information processing apparatus 12 compares the predicted peak resolution after the elapse of the second period (for example, 90 days later) stored in the storage unit 31 with the threshold value. Here, the threshold value to be compared with the predicted peak resolution after the elapse of the second period may be the same numerical value as the threshold value to be compared with the predicted peak resolution after the elapse of the first period in Step S205, or may be a different numerical value.

When the predicted peak resolution after the elapse of the second period (for example, 90 days later) is greater than the threshold value (YES in S208), the determining unit 34 determines that the column 22 will be in a healthy state after the elapse of the second period (for example, 90 days later) or will not be in replacement timing after the elapse of the second period (for example, 90 days later), and the step ends.

On the other hand, when the predicted peak resolution after the elapse of the second period (for example, 90 days later) is equal to or less than the threshold value (NO in S208), the determining unit 34 determines that the column 22 will not be in a healthy state after the elapse of the second period (for example, 90 days later) or will be in replacement timing after the elapse of the second period (for example, 90 days later), and the process proceeds to Step S209.

In Step S209, the output unit 36 notifies the operator that the column 22 will not be in a healthy state after the elapse of the second period (for example, 90 days later) or that the column 22 will be in replacement timing (the replacement time is approaching) after the elapse of the second period (for example, 90 days later), and the step ends.

Technological Improvements

The analysis system 1 can accurately diagnose the state of the columns 22 by performing the above-described operations. Depending on the diagnosis result, the operator can take measures such as ordering a new column before the column enters an anomaly state. Before the column enters the anomaly state or as soon as the column enters the anomaly state, the replacement with a new column is allowed.

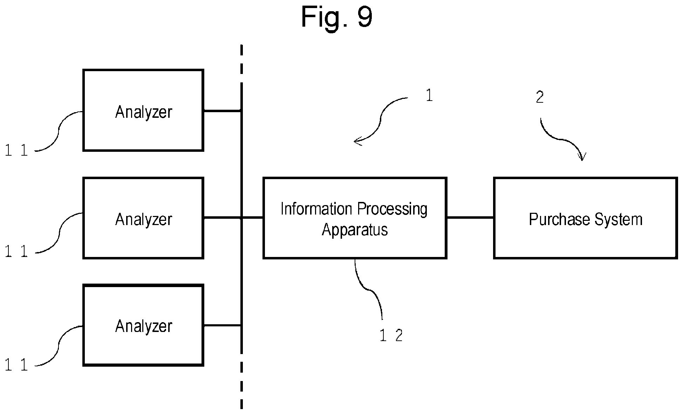

As a modification of the analysis system according to one or more embodiments, for example, as shown in FIG. 9, the analysis system 1 may be connected to a purchasing system 2 that orders columns. Accordingly, it is possible to predict an appropriate order timing based on a time for delivery of the column 22 and the diagnosis result or the prediction result by the analysis system 1. Connecting with the purchasing system allows constructing a mechanism for automatically placing an order for the column 22 according to the diagnosis result or the prediction result by the analysis system 1. This results in a long-term efficient and reliable system operation.

Although the disclosure has been described with respect to only a limited number of embodiments, those skilled in the art, having benefit of this disclosure, will appreciate that various other embodiments may be devised without departing from the scope of the present disclosure, as determined by the claims.

DESCRIPTION OF SYMBOLS

| 1 | Analysis system |
|---|---|
| 2 | Purchase system |
| 11 | Analyzer |
| 12 | Information processing apparatus |
| 21 | Sample inlet |
| 22 | Column |
| 23 | Component detector |
| 31 | Storage unit |
| 32 | Calculating unit |
| 33 | Predicting unit |
| 34 | Determining unit |
| 35 | Setting unit |
| 36 | Output unit |
| 36A | First screen |
| 36B | Second screen |
| 36C | Third screen |

**Claims**

1.  An analysis system (1) comprising:

    a storage (31) configured to:

receive peak resolutions of a chromatogram obtained from a column (22) gas-chromatograph (11) configured to separate a component from a sample gas, and
store each of the peak resolutions in association with a specific time; and

a processor configured to predict a state of the column (22) based on the stored peak resolutions,

wherein the state includes:

a first state of the column (22) after a first period has elapsed, and
a second state of the column (22) after a second period has elapsed, the second period being longer than the first period.

2. The analysis system (1) according to claim 1, wherein the processor (12) is configured to generate the peak resolutions based on peak resolutions from a past predetermined period.

3. The analysis system (1) according to claim 1, wherein the processor is configured to predict the first state and the second state based on different calculating methods.

4. The analysis system (1) according to any one of the preceding claims, wherein the processor is configured to:

predict a future peak resolution as a state of the column (22);
set a threshold value; and
determine whether to replace the column (22) by comparing the future peak resolution with the threshold value.

5. The analysis system (1) according to any one of the preceding claims, wherein

the storage (31) is configured to store the peak resolutions of columns (22) in association with respective identification numbers of the columns (22) and the specific time, and
the processor is configured to predict respective states of the columns (22).

6. The analysis system (1) according to any one of the preceding claims, further comprising:
an output unit (36) configured to output the predicted state of the column (22).

7. The analysis system (1) according to claim 6, wherein the output unit (36) includes a display configured to display an image indicating the predicted state of the column (22).

**Patentansprüche**

1. Analysesystem (1), umfassend:

einen Speicher (31), der dafür ausgelegt ist:

Peakauflösungen eines Chromatogramms zu empfangen, das von einem Säulen- (22) Gaschromatographen (11) erhalten wurde, der dafür ausgelegt ist, eine Komponente von einem Probengas zu trennen, und
jede der Peakauflösungen in Verbindung mit einem spezifischen Zeitpunkt zu speichern; und

einen Prozessor, der dafür ausgelegt ist, einen Zustand der Säule (22) basierend auf den gespeicherten Peakauflösungen vorherzusagen,

wobei der Zustand beinhaltet:

einen ersten Zustand der Säule (22), nachdem ein erster Zeitraum vergangen ist, und
einen zweiten Zustand der Säule (22), nachdem ein zweiter Zeitraum vergangen ist, wobei der zweite Zeitraum länger als der erste Zeitraum ist.

**2.** Analysesystem (1) nach Anspruch 1, wobei der Prozessor (12) dafür ausgelegt ist, die Peakauflösungen basierend auf Peakauflösungen aus einem vergangenen vorbestimmten Zeitraum zu erzeugen.

**3.** Analysesystem (1) nach Anspruch 1, wobei der Prozessor dafür ausgelegt ist, den ersten Zustand und den zweiten Zustand basierend auf unterschiedlichen Berechnungsmethoden vorherzusagen.

**4.** Analysesystem (1) nach einem der vorhergehenden Ansprüche, wobei der Prozessor dafür ausgelegt ist:

eine zukünftige Peakauflösung als einen Zustand der Säule (22) vorherzusagen;
einen Schwellenwert festzulegen; und
durch Vergleichen der zukünftigen Peakauflösung mit dem Schwellenwert zu bestimmen, ob die Säule (22) auszutauschen ist.

**5.** Analysesystem (1) nach einem der vorhergehenden Ansprüche, wobei

der Speicher (31) dafür ausgelegt ist, die Peakauflösungen von Säulen (22) in Verbindung mit jeweiligen Identifikationsnummern der Säulen (22) und dem spezifischen Zeitpunkt zu speichern, und
der Prozessor dafür ausgelegt ist, jeweilige Zustände der Säulen (22) vorherzusagen.

**6.** Analysesystem (1) nach einem der vorhergehenden Ansprüche, ferner umfassend:
eine Ausgabeeinheit (36), die dafür ausgelegt ist, den vorhergesagten Zustand der Säule (22) auszugeben.

**7.** Analysesystem (1) nach Anspruch 6, wobei die Ausgabeeinheit (36) eine Anzeigevorrichtung aufweist, die dafür ausgelegt ist, ein Bild anzuzeigen, das den vorhergesagten Zustand der Säule (22) zeigt.


**Revendications**

**1.** Un système d'analyse (1) comprenant :

un dispositif de stockage (31) configuré pour :

recevoir des résolutions de pic d'un chromatogramme obtenu à partir d'un chromatographe en phase gazeuse (11) à colonne (22) configuré pour séparer un composant d'un échantillon de gaz, et
stocker chacune des résolutions de pic en association avec un moment spécifique ; et

un processeur configuré pour prédire un état de la colonne (22) en fonction des résolutions de pic stockées,

dans lequel l'état comprend :

un premier état de la colonne (22) après l'écoulement d'une première période, et
un second état de la colonne (22) après l'écoulement d'une seconde période, ladite seconde période étant plus longue que la première.

**2.** Le système d'analyse (1) selon la revendication 1, dans lequel le processeur (12) est configuré pour générer les résolutions de pic sur la base de résolutions de pic d'une période prédéterminée antérieure.

**3.** Le système d'analyse (1) selon la revendication 1, dans lequel le processeur est configuré pour prédire le premier état et le deuxième état sur la base de méthodes de calcul différentes.

**4.** Le système d'analyse (1) selon l'une quelconque des revendications précédentes, dans lequel
le processeur est configuré pour :

prévoir une résolution de pic future en tant qu'état de la colonne (22) ;
fixer une valeur de seuil ; et
déterminer s'il faut remplacer la colonne (22) en comparant la résolution de pic future à la valeur seuil.

**5.** Le système d'analyse (1) selon l'une quelconque des revendications précédentes, dans lequel

le dispositif de stockage (31) est configuré pour stocker les résolutions de pic de colonnes (22) en association avec les numéros d'identification respectifs des colonnes (22) et le moment spécifique, et

le processeur est configuré pour prédire les états respectifs des colonnes (22).

6.  Le système d'analyse (1) selon l'une quelconque des revendications précédentes, comprenant en outre : une unité de sortie (36) configurée pour fournir l'état prédit de la colonne (22).

7.  Le système d'analyse (1) selon la revendication 6, dans lequel l'unité de sortie (36) comprend un écran configuré pour afficher une image indiquant l'état prédit de la colonne (22).

# Fig. 1

# Fig. 2

# Fig. 3

# Fig. 4

3 6 A

**All Log**

2021/12/1 9:00 ID001 · · ·
2021/12/1 9:30 ID003 · · ·
2021/1/10 10:00 ID016 · · ·

| ID | GC Health | ID | GC Health | ID | GC Health | ID | GC Health |
|----|-----------|-----|-----------|-----|-----------|------|-----------|
| <u>001</u> | ○  ☆ | <u>015</u> | ○ | | | | |
| <u>002</u> | ○ | <u>016</u> | ✕  ☆ | | | | |
| <u>003</u> | ○ | | | <u>025</u> | △ | | |
| | | | | | | <u>064</u> | |

○ : Healthy　△ : pre-anomaly　✕ : anomaly　☆ : Attributable to Unentered Input

# Fig. 5

3 6 B

**ID:001**

| Peak | Current Resolution | Resolution after 30 Days | Threshold Value |
|------|--------------------|--------------------------|-----------------|
| 1 | 3.0 | 2.5 | <u>1.5</u> |
| 2 | 7.2 | 7.0 | <u>1.5</u> |
| 3 | 2.5 | 2.5 | <u>1.2</u> |
| 4 | 3.3 | 3.5 | <u>3</u> |
| 5 | 10.0 | 9.9 | <u>1.5</u> |

**Setting**     **Close**

# Fig. 6

3 6 C

**ID:001**

Predicted Line

Actually Measured Line

Resolution

Time Axis

PV  Pred.

Peak1 ——  ☑  ☑
Peak2 ——  ☐  ☐

# Fig. 7

```
        START

S101   Calculate Peak Resolution

S102   Are Peak Resolutions
       for Predetermined Period Stored?        NO

              YES

S103   Generate Resolution Data

S104   Predict Peak Resolution

S105   Is Predicted Peak Resolution
       Greater Than Threshold Value?           NO

              YES                              Alert

        END                                   S106
```

# Fig. 8

```
                        ┌──────────────────┐
                        │      START       │
                        └──────────────────┘
                                 │
   S201                 ┌──────────────────┐
                        │ Calculate Peak Resolution │
                        └──────────────────┘
                                 │
   S202                       ╱──────╲
                          ╱───────────────╲          NO
                         ╱  Are Peak Resolutions ╲
                         ╲ for Predetermined Period Stored? ╱
                          ╲───────────────╱
                                 │ YES
   S203                 ┌──────────────────┐
                        │ Generate Resolution Data │
                        └──────────────────┘
                                 │
   S204                 ┌──────────────────┐
                        │ Predict Peak Resolution │
                        └──────────────────┘
                                 │
   S205                       ╱──────╲                    S207
                          ╱───────────────╲
                         ╱ Is Predicted Peak Resolution ╲
                         ╲ Greater Than Threshold Value? ╱
                          ╲───────────────╱           ┌───────┐
                                 │                     │ Alert │
   S206                 ┌──────────────────┐           └───────┘
                        │ Predict Peak Resolution │
                        └──────────────────┘
                                 │
   S208                       ╱──────╲
                          ╱───────────────╲
                         ╱ Is Predicted Peak Resolution ╲
                         ╲ Greater Than Threshold Value? ╱
                          ╲───────────────╱         ┌───────┐
                                 │                   │ Alert │
                                 │                   └───────┘
                                 │                      S209
                        ┌──────────────────┐
                        │       END        │
                        └──────────────────┘
```

# Fig. 9

**EP 4 257 971 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005300397 A
- WO 2019203972 A1
- US 2020103382 A1